# EUROPEAN PATENT SPECIFICATION

(11) **EP 2 928 176 B1**
(45) Date of publication and mention of the grant of the patent: **13.09.2017**
(21) Application number: 15162556.3
(22) Date of filing: 07.04.2015
(51) Int. Cl.: H04N 1/60, G06K 15/02

(54) **MEDICAL IMAGE PRINTING DEVICE AND SYSTEM**
VORRICHTUNG UND SYSTEM ZUM DRUCKEN MEDIZINISCHER BILDER
DISPOSITIF D'IMPRESSION D'IMAGE MÉDICALE ET SYSTÈME

(30) Priority: 04.04.2014 CN 201410136949
(43) Date of publication of application: 07.10.2015
(73) Proprietor: Ricoh Company, Ltd., Tokyo 143-8555 (JP)
(72) Inventor: Li, Huachen, Shanghai (CN)
(74) Representative: Maury, Richard Philip

(56) References cited:
- JP-A- 2008 131 606
- US-A1- 2013 016 370

## Description

### BACKGROUND OF THE INVENTION

### 1. Field of the Invention

The present invention relates to a medical image printing device and a medical image printing system for printing a diagnostic image used to assist medical diagnosis in the medical field.

### 2. Description of the Related Art

In the medical field, a diagnostic image may be generated by taking a picture of a part of a patient body such as his/her chest or brain. And then, a doctor may make a diagnosis on the basis of this kind of diagnostic image. On the other hand, the patient also needs a printing medium on which this kind of diagnostic image is printed. In the conventional techniques, a diagnostic image is printed on a photographic film medium (also called a "film medium") by utilizing a photographic film printer (also called a "film printer"). However, this kind of film medium is not only expensive but also inconvenient for carrying. Aside from these, the quality of the diagnostic image on this kind of film medium is easily influenced by long-time exposure, and the material of this kind of film medium is difficultly degraded.

In general, a diagnostic image generated on a film medium is a black and white image. This kind of black and white image includes only black, white, and gray colors, and the area of the black part thereof is relatively large.

In addition, in the conventional techniques, there is also a proposal of printing a diagnostic image on a paper medium by using a color printer. Compared to the film medium, this kind of paper medium is not only cheap but also convenient for carrying. Aside from these, the quality of the diagnostic image on this kind of paper medium is easily kept, and the material of this kind of paper medium is easily degraded.

However, in a case where a color printer prints a black and white diagnostic image, cyan, magenta, and yellow toners are utilized. As a result, in this case, after a gray part of the diagnostic image is printed, a problem of color shift may occur on this kind of gray part due to the use of the color toners. This may result in negative influence on the accuracy of diagnosis of a doctor.

In order to avoid this kind of color shift problem, in the conventional techniques, there is also a proposal of printing a diagnostic image on a paper medium by using a monochrome printer. In this case, after a gray part of the diagnostic image is printed, since only black toner is utilized, a problem of color shift may not occur on this kind of gray part. However, in this case, after a black part of the diagnostic image is printed, since only the black toner is used, a problem, that the level of black color is not high enough, may occur on this kind of black part. This may also result in negative influence on the accuracy of diagnosis of a doctor.

US2013/0016370A discloses converting RBG or CYMK image data to CMYK data and printing them on paper using CMYK toners, including determining whether an input pixel is gray and, if so, using a look-up table to convert gray colour values to black colour values.

### SUMMARY OF THE INVENTION

In light of the above-described problems in the conventional techniques, the objective of the present invention is to provide a medical image printing device and a medical image printing system by which it is possible to guarantee, after a black part of a diagnostic image is printed, that the level of black color of the printed black part is high enough, and to guarantee, after a gray part of the diagnostic image is printed, that a problem of color shift does not occur on the printed gray part.

The invention is in the devices of claims 1 and 4.

### BRIEF DESCRIPTION OF THE DRAWINGS

FIG. 1 is a block diagram of a medical image printing system according to a first embodiment of the present invention;
FIG. 2 is a block diagram of a medical image printing device according to the first embodiment of the present invention;
FIG. 3 is a flowchart of a process of the medical image printing device according to the first embodiment of the present invention;
FIG. 4A illustrates a color value correspondence relationship of a first predetermined calculation rule;
FIG. 4B illustrates a color value correspondence relationship of a predetermined conversion rule;
FIG. 4C illustrates a color value correspondence relationship of a second predetermined calculation rule;
FIG. 5 is a block diagram of a medical image printing device according to a second embodiment of the present invention;
FIG. 6 is a flowchart of a process of the medical image printing device according to the second embodiment of the present invention;
FIG. 7 is a block diagram of a medical image printing device according to a third embodiment of the present invention; and
FIG. 8 is a flowchart of a process of the medical image printing device according to the third embodiment of the present invention.

### DETAILED DESCRIPTION OF THE PREFERRED EMBODIMENTS

In order to let those people skilled in the art better understand the present invention, also the present invention will be concretely described on the basis of the drawings and various embodiments.

According to a first aspect of the present invention, a medical image printing device is provided. The medical image printing device is for printing, based on printing image data whose data type is a CMYK data type and which is converted from medical image data output by a medical image communications system, a diagnostic image on a paper medium by utilizing CMYK toners. The medical image printing device includes:
a reading part, a second determination part, a calculation part, a third determination part, a change part, and a printing part,
wherein, for each pixel,
the reading part sequentially reads pixel data corresponding to this pixel from the printing image data, and obtains CMYK color values of the pixel data of this pixel;
the second determination part determines whether the CMY color values are equal to a same value, and if so, determines this pixel as a grayscale pixel;
the calculation part conducts, according to a first predetermined calculation rule, calculation with respect to any one of the CMY color values and the K color value, and sets a new K value to serve as a newly-set K value;
the third determination part determines whether the newly-set K value is greater than or equal to a first predetermined threshold, if so, further determines the grayscale pixel as a black pixel, and controls the change part to set the CMYK color values of the black pixel to 255, so as to obtain second CMYK color values of the black pixel, otherwise, further determines the grayscale pixel as a gray-white pixel, and controls the change part to set the CMY color values of the gray-white pixel to zero, and to set the K color value of the gray-white pixel to the newly-set K value, so as to obtain second CMYK color values of the gray-white pixel; and
the printing part prints the black pixel based on the second CMYK color values of the black pixel or the gray-white pixel based on the second CMYK color values of the gray-white pixel.

Furthermore, according to a second aspect of the present invention, a medical image printing device is provided. The medical image printing device is for printing, based on printing image data whose data type is a RGB data type and which is converted from medical image data output by a medical image communications system, a diagnostic image on a paper medium by utilizing CMYK toners. The medical image printing device includes:
a reading part, a second determination part, a third determination part, a conversion part, a change part, and a printing part,
wherein, for each pixel,
the reading part sequentially reads pixel data corresponding to this pixel from the printing image data, and obtains RGB color values of the pixel data of this pixel;
the second determination part determines whether the RGB color values are equal to a same value, and if so, determines this pixel as a grayscale pixel;
the third determination part determines whether any one of the RGB color values of the grayscale pixel is less than or equal to a second predetermined threshold, if so, determines the grayscale pixel as a black pixel, controls the conversion part to convert, according to a predetermined conversion rule, the RGB color values of the black pixel into CMYK color values, and further controls the change part to set the converted CMYK color values of the black pixel to 255, so as to obtain second CMYK color values of the black pixel, otherwise, determines the grayscale pixel as a gray-white pixel, controls the conversion part to convert, according to the predetermined conversion rule, the RGB color values of the gray-white pixel into CMYK color values, and further controls the change part to set the converted CMY color values of the gray-white pixel to zero, and to set, based on any one of the RGB color values of the white-gray pixel, a new K value to serve as a newly-set K value according to a second predetermined calculation rule, so as to obtain second CMYK color values of the gray-white pixel; and
the printing part prints the black pixel based on the second CMYK color values of the black pixel or the gray-white pixel based on the second CMYK color values of the gray-white pixel.

Moreover, according to a third aspect of the present invention, a medical image printing device is provided. The medical image printing device is for printing, based on printing image data which are converted from medical image data output by a medical image communications system, a diagnostic image on a paper medium by utilizing CMYK toners. The medical image printing device includes:
a first determination part, a reading part, a second determination part, a calculation part, a third determination part, a conversion part, a change part, and a printing part,
wherein, the first determination part determines a data type of the printing image data as a CMYK data type or a RGB data type,
in a case where the first determination part determines the data type of the printing image data as the CMYK data type,
   as for each pixel,
   the reading part sequentially reads pixel data corresponding to this pixel from the printing image data, and obtains CMYK color values of the pixel data of this pixel;
   the second determination part determines whether the CMY color values are equal to a same value, and if so, determines this pixel as a grayscale pixel;
   the calculation part conducts, according to a first predetermined calculation rule, calculation with respect to any one of the CMY color values and the K color value, and sets a new K value to serve as a newly-set K value;
   the third determination part determines whether the newly-set K value is greater than or equal to a first predetermined threshold, if so, further determines the grayscale pixel as a black pixel, and controls the change part to set the CMYK color values of the black pixel to 255, so as to obtain second CMYK color values of the black pixel, otherwise, further determines the grayscale pixel as a gray-white pixel, and controls the change part to set the CMY color values of the gray-white pixel to zero, and to set the K color value of the gray-white pixel to the newly-set K value, so as to obtain second CMYK color values of the gray-white pixel; and
   the printing part prints the black pixel based on the second CMYK color values of the black pixel or the gray-white pixel based on the second CMYK color values of the gray-white pixel, and
in a case where the first determination part determines the data type of the printing image data as the RGB data type,
   as for each pixel,
   the reading part sequentially reads pixel data corresponding to this pixel from the printing image data, and obtains RGB color values of the pixel data of this pixel;
   the second determination part determines whether the RGB color values are equal to a same value, and if so, determines this pixel as a grayscale pixel;
   the third determination part determines whether any one of the RGB color values of the grayscale pixel is less than or equal to a second predetermined threshold, if so, determines the grayscale pixel as a black pixel, controls the conversion part to convert, according to a predetermined conversion rule, the RGB color values of the black pixel into CMYK color values, and further controls the change part to set the converted CMYK color values of the black pixel to 255, so as to obtain second CMYK color values of the black pixel, otherwise, determines the grayscale pixel as a gray-white pixel, controls the conversion part to convert, according to the predetermined conversion rule, the RGB color values of the gray-white pixel into CMYK color values, and further controls the change part to set the converted CMY color values of the gray-white pixel to zero, and to set, based on any one of the RGB color values of the white-gray pixel, a new K value to serve as a newly-set K value according to a second predetermined calculation rule, so as to obtain second CMYK color values of the gray-white pixel; and
   the printing part prints the black pixel based on the second CMYK color values of the black pixel or the gray-white pixel based on the second CMYK color values of the gray-white pixel.

The medical image printing device according to the first and third aspects of the present invention further includes:
a keeping part, wherein, if the second determination part determines that the CMY color values are not equal to the same value, then the second determination part determines that the corresponding pixel is a color pixel, wherein, the keeping part keeps the CMYK color values of the color pixel unchanged; and the printing part prints the color pixel based on the unchanged CMYK color values of the color pixel.

In the medical image printing device according to the first and third aspects of the present invention, the first threshold is 250.

In the medical image printing device according to the second and third aspects of the present invention, if the second determination part determines that the RGB color values of the corresponding pixel are not equal to the same value, then the second determination part determines that the corresponding pixel is a color pixel, wherein, the third determination part controls the conversion part to convert, according to the predetermined conversion rule, the RGB color values of the color pixel into CMYK color values; and the printing part prints the color pixel based on the converted CMYK color values of the color pixel.

In the medical image printing device according to the second and third aspects of the present invention, the second threshold is 5.

In the medical image printing device according to the first and third aspects of the present invention, the first predetermined calculation rule is calculating a sum of any one of the CMY color values and the K value of the gray-white pixel to serve as the new K value.

In the medical image printing device according to the second and third aspects of the present invention, the second predetermine calculation rule is subtracting any one of the RGB color values of the gray-white pixel from 255 to serve as the new K value.

Additionally, according to a fourth aspect of the present invention, a medical image printing system is provided. The medical image printing system is connected to a medical image communications system, and communicates with the medical image communications system. The medical image printing system includes:
a data conversion device for converting medical image data output from the medical image communications system into printing image data; and
a medical image printing device for receiving the printing image data, and printing, based on the printing image data, a diagnostic image on a paper medium by utilizing CMYK toners,
wherein,
   the medical image printing device includes the medical image printing device according to any one of the first to third aspects of the present inventions.

### <First Embodiment>

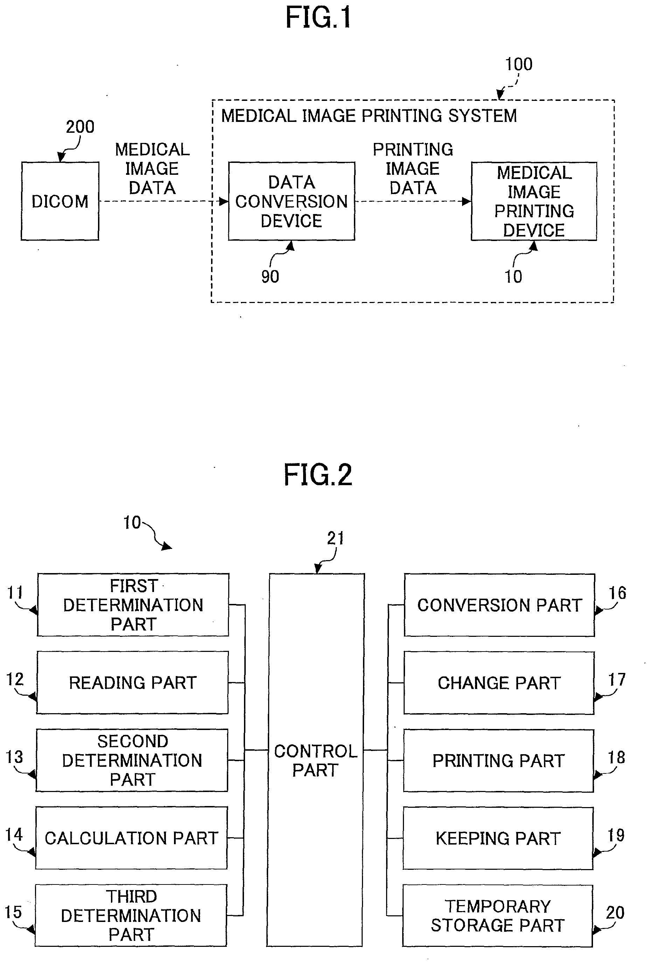

FIG. 1 is a block diagram of a medical image printing system according to this embodiment.

As shown in FIG. 1, a medical image printing system 100 is connected to a medical image communications system 200, and communicates with the medical images communications system 200. After a part of a patient's body is photographed (scanned) by a computed tomography (CT) scan machine, a magnetic resonance imaging (MRI) machine, or a computed radiography (CR) system, the medical image communications system 200 (for example, the Digital Imaging and Communications in Medicine (DICOM)) outputs medical image data which conform to a standard communications protocol.

The medical image printing system 100 includes a medical image printing device 10 and a data conversion device 90.

The data conversion device 90 is used to convert the medical image data output from the medical image communications system 200 into printing image data (i.e., image data able to be used for printing). The format of the printing image data can be recognized by the medical image printing device 10. The medical image printing device 10 receives the printing image data from the data conversion device 90, and then, on the basis of the printing image data, prints a diagnostic image on a paper medium by utilizing, for example, cyan (C), magenta (M), yellow (Y), and key (K) toners (also called "CMYK toners"). The diagnostic image is used for assisting a doctor to conduct a diagnosis with respect to the part of the patient's body.

The medical image printing device 10 may print the diagnostic image on the paper medium by utilizing the four types of color toners. The diagnostic image may be a color image, and may also be a black and white image (also called a "monochrome image") including only black, white, and gray colors.

In this embodiment, the data type of the printing image data received by the medical image printing device 10 is not a specific data type. That is to say, it may be a CMYK data type, and may also be a RGB data type. By using the CMYK data type, cyan, magenta, yellow, and black colors are defined. And by using the RGB data type, red (R), green (G), and (B) colors are defined.

FIG. 2 is a block diagram of the medical image printing device 10 according to this embodiment.

As shown in FIG. 2, the medical image printing device 10 includes a data type determination part (also called a "first determination part") 11, a reading part 12, a color value determination part (also called a "second determination part") 13, a calculation part 14, a third determination part 15, a conversion part 16, a change part 17, a printing part 18, a keeping part 19, a temporary storage part 20, and a control part 21 for controlling the above-mentioned parts.

The first determination part 11 conducts determination with respect to the data type of the received printing image data. Namely, it determines the data type of the received printing image data as a CMYK data type or a RGB data type.

The reading part 12 sequentially reads (obtains), for each pixel, its pixel data from the printing image data. In a case of the CMYK data type, the pixel data of each pixel includes CMYK color values. In a case of the RGB data type, the pixel data of each pixel includes RGB color values.

The second determination part 13 is used to determine whether the obtained CMY color values of each pixel are equal, or whether the obtained RGB color values of each pixel are equal. If it is determined that the obtained CMY color values of a pixel are equal, or the obtained RGB color values of a pixel are equal, then the pixel is determined as a grayscale pixel. And if it is determined the obtained CMY color value are not equal, or the obtained RGB color values are not equal, then the pixel is determined as a color pixel. Here it should be noted that if the pixel is determined as a color pixel on the basis of the obtained CMY color values, then the CMYK color values of the pixel are kept (i.e., unchanged).

The calculation part 14 is used to conduct, on the basis of a first predetermined calculation rule, calculation with respect to any one of the CMY color values and the K color value of a grayscale pixel, and sets a new K color value to serve as a newly-set K value of the grayscale pixel.

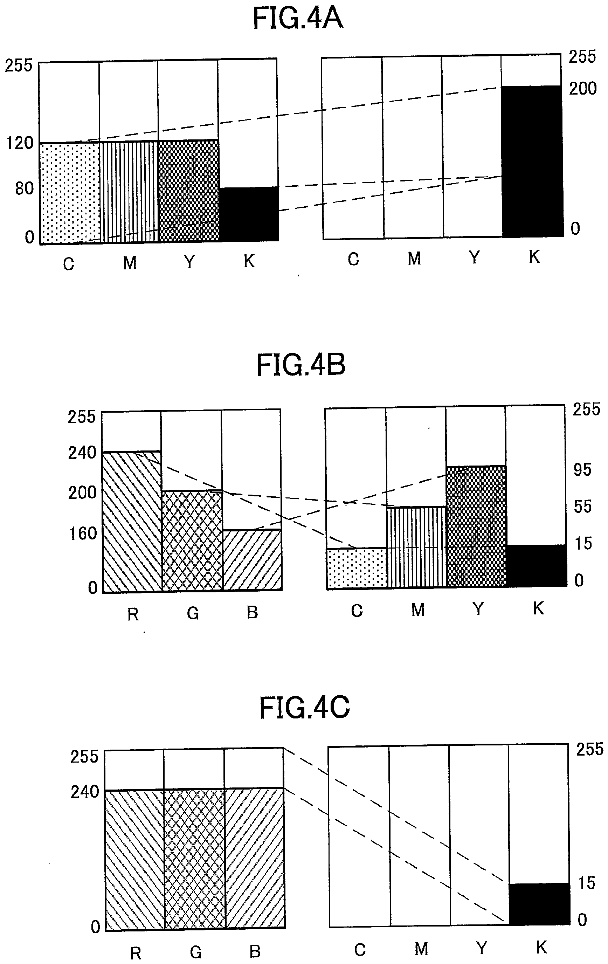

FIG. 4A illustrates a color value correspondence relationship of the first predetermined calculation rule.

As shown in FIG. 4A, for example, regarding a pixel shown in the left image of FIG. 4A, if its C color value is 120, and its K color value is 80, then the calculation part 14 calculates the sum of the C value (i.e., 120) and the K color value (i.e., 80), and then lets the calculated result (i.e., 200) serve as a newly-set K color value of the pixel (as shown in the right image of FIG. 4A). Here, since the obtained CMY color values are equal to 120, the pixel is determined as a grayscale pixel. Hence, according to the first predetermined calculation rule, it is possible to let the sum of any one of CMY color values and the K color value of a grayscale pixel be a newly-set K color value of the grayscale pixel.

As shown in FIG. 2, the third determination part 15 is used to determine whether a newly-set K color value of a grayscale pixel is greater than or equal to a predetermined upper limit color value threshold (also called a "first predetermined threshold"). In this embodiment, the first predetermined threshold is set to 250. If the newly-set K color value of the grayscale pixel is greater than or equal to the first predetermined threshold (i.e., 250), then the third determination part 15 further determines the grayscale pixel as a black pixel, and then, controls the change part 17 so as to cause it to set the CMYK values of the black pixel to 255. If the newly-set K color value of the grayscale pixel is less than the first predetermined threshold (i.e., 250), the third determination part 15 further determines the grayscale pixel as a gray-white pixel, and then, controls the change part 17 so as to cause it to set the CMY color values of the gray-white pixel to zero, and to set the K color value of the gray-white pixel to the newly-set K color value. For example, regarding the grayscale pixel shown in FIG. 4A, as described above, the newly-set K color value is 200. Since this newly-set K color value is less than the first predetermined threshold, the grayscale pixel shown in FIG. 4A may be determined as a gray-white pixel.

On the other hand, the third determination part 15 is also used to determine whether any one of the RGB color values of a grayscale pixel is less than or equal to a predetermined lower limit color value threshold (also called a "second predetermined threshold"). In this embodiment, the second predetermined threshold is set to 5. In the former case, the third determination part 15 determines the grayscale pixel as a black pixel; then, controls the conversion part 16 so as to cause it to convert, according to a predetermined conversion rule, the RGB color values of the black pixel into CMYK color values; and then, controls the change part 17 so as to cause it to set the converted CMYK color values to 255. In the latter case, the third determination part 15 determines the grayscale pixel as a gray-white pixel; then, controls the conversion part 16 so as to cause it to convert, according to the predetermined conversion rule, the RGB color values of the gray-white pixel into CMYK color values; and then, controls the change part 17 so as to cause it to set the converted CMY color values to zero, and to cause it to set, on the basis of any one of the RGB color values, a new K color value to be a newly-set K color value according to a second predetermined calculation rule.

The third determination part 15 is also used to control the conversion part 16 to cause it convert, according to the predetermined conversion rule, the RGB color values of a color pixel into CMYK color values. Here it should be noted that if a pixel is determined as a color pixel, then its converted CMYK color values are unchanged.

Moreover, the third determination part 15 is also used to determine whether the pixel data of each pixel is read out from the printing image data by the reading part 12. If so, the third determination part 15 controls the printing part 18 so as to cause it to conduct a printing process with respect to each pixel. If not so, the third determination part 15 controls the reading part 12 so as to cause it to sequentially read the pixel data of a next pixel.

FIG. 4B illustrates a color value correspondence relationship of the predetermined conversion rule.

As shown in FIG. 4B, in this embodiment, for example, if the RGB color values of a pixel shown in the left image of FIG. 4B are 240, 200, and 160, i.e., they are not equal, then it is possible to know that the pixel is a color pixel. The conversion part 16 converts, according to the predetermined conversion rule, the RGB color values of the color pixel into CMYK color values. In particular, the CMY color values are obtained by subtracting the RGB color values from 255, respectively. Namely, the C color value is 15, the M color value is 55, and the Y color value is 95. In addition, the conversion part 16 sets the K color value to the minimum value of the obtained CMY color values. Namely, the K color value is 15.

FIG. 4C illustrates a color value correspondence relationship of the second predetermined calculation rule.

As shown in FIG. 4C, in this embodiment, for example, if the RGB color values of a pixel shown in the left image of FIG. 4C are equal to 240, then the pixel is determined as a grayscale pixel.

As described above, the change part 17 may set the CMY color values, which are converted from the RGB color values according to the predetermined conversion rule, to zero (as shown in the right image in FIG. 4C), and may set, on the basis of any one of the RGB color values, a new K color value to serve as a newly-set K color value according to the second predetermined calculation rule. In particular, the newly-set K color value may be obtained by subtracting any one of the RGB color values (i.e., 240) from 255. Namely, the obtained newly-set K color value is 15 (as shown in the right image in FIG. 4C). Here, since the RGB color values are equal to 240 (as shown in the left image of FIG. 4C), according to the second predetermined calculation rule, it is possible to calculate a newly-set K color value by subtracting any one of the obtained RGB color values from 255.

As shown in FIG. 2, the keeping part 19 is used to keep the obtained CMYK color values of a pixel, which is determined as a color pixel whose related printing image data type is the CMYK data type, unchanged.

The temporary storage part 20 is used to temporarily store the CMYK color values changed on the basis of the color values of a currently-read black or gray-white pixel; to temporarily store the unchanged CMYK color values of a currently-read color pixel whose related printing image data type is the CMYK data type; and to temporarily store the CMYK color values converted from the RGB color values of a currently-read color pixel whose related printing image data type is the RGB data type.

The printing part 18 is used to, regarding a black pixel or a gray-white pixel, conduct a printing process with respect to this pixel according to the CMYK color values changed on the basis of the color values of this pixel. In addition, the printing part 18 is also used to, regarding a color pixel, if its related printing image data type is the CMYK data type, then conduct a printing process with respect to this pixel according to its unchanged CMYK color values; and if its related printing image data type is the RGB data type, then conduct a printing process with respect to this pixel according to its CMYK color values converted from its RGB color values.

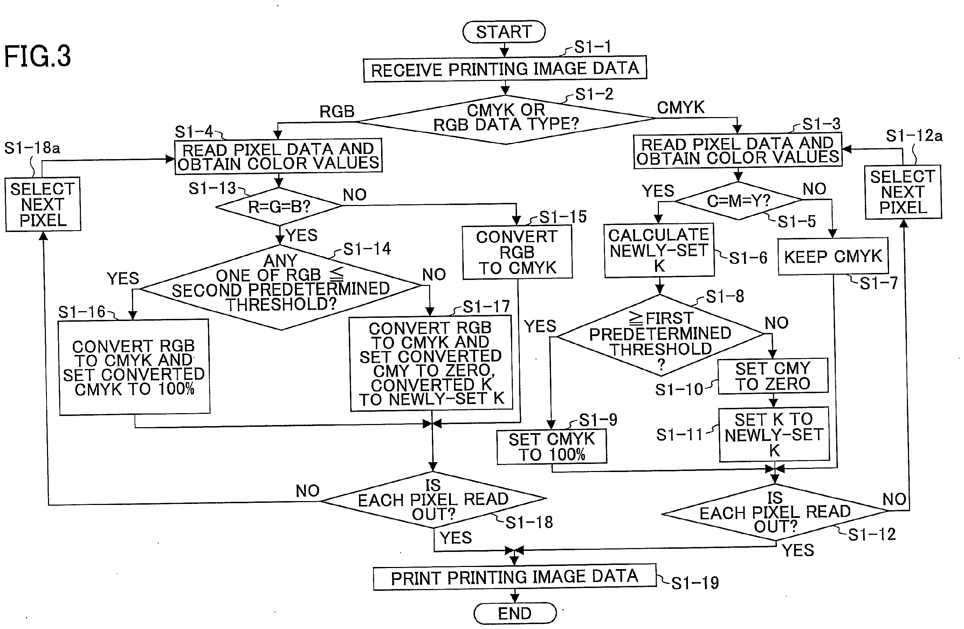

In what follows, a process of the medical image printing device 10 is given by referring to FIG. 3.

FIG. 3 is a flowchart of the process of the medical image printing device 10.

As shown in FIG. 3, the flowchart of the process of the medical image printing device 10 includes the following steps.

STEP S1-1: the medical printing device 10 receives printing image data, which is converted by the data conversion device 90 and is output from the data conversion device 90. And then, the process goes to STEP S1-2.

STEP S1-2: the first determination part 11 determines the data type of the received printing image data. If the data type is the CMYK data type, then the process goes to STEP S1-3, and if the data type is the RGB data type, then the process goes to STEP S1-4.

STEP S1-3: the reading part 12 sequentially reads, regarding a pixel, its pixel data from the printing image data, and obtains the CMYK color values from the pixel data of this pixel. And then, the process goes to STEP S1-5.

STEP S1-4: the reading part 12 sequentially reads, regarding a pixel, its pixel data from the printing image data, and obtains the RGB color values from the pixel data of this pixel. And then, the process goes to STEP S1-13.

STEP S1-5: the second determination part 13 determines whether the CMY color values are equal to a same value. If so, the pixel is determined as a grayscale pixel, and the process goes to STEP S1-6. If not so, the process goes to STEP S1-7.

STEP S1-6: the calculation part 14 calculates the sum of any one of the CMY color values and the K color value of the grayscale pixel according to the first predetermined calculation rule shown in FIG. 4A as a new K color value, and lets the new K color value be a newly-set K value. And then, the process goes to STEP S1-8.

STEP S1-7: the keeping part keeps the CMYK color values of the color pixel unchanged. And then, the process goes to STEP S1-12.

STEP S1-8: the third determination part 15 determines whether the newly-set K color value is greater than or equal to the first predetermined threshold (i.e., 250). If so, the grayscale pixel is further determined as a black pixel, and then the process goes to STEP S1-9. If not so, the grayscale pixel is further determined as a gray-white pixel, and then the process goes to STEP S1-10.

STEP S1-9: the third determination part 15 controls the change part 17 so as to let it set all the CMYK color values of the black pixel to 255. And then, the process goes to STEP S1-12.

STEP S1-10: the third determination part 15 controls the change part 17 so as to let it set all the CMY color values of the gray-white pixel to zero, as shown in FIG. 4A. And then, the process goes to STEP S1-11.

STEP S1-11: the third determination part 15 controls the change part 17 so as to let it set the K color value (i.e., 80) of the gray-white pixel to the newly-set K color value (i.e., 200). And then, the process goes to STEP S1-12.

STEP S1-12: the third determination part 15 determines whether the pixel data of each pixel is read out from the printing image data by the reading part 12. If not so, the third determination part 15 controls the temporary storage part 20 so as to let it temporarily store, regarding the currently-read black pixel or the gray-white pixel, its changed CMYK color values, and regarding the currently-read color pixel, its kept (unchanged) CMYK color values. And then, the process goes to STEP S1-12a. If so, the process goes to STEP S1-19.

STEP S1-12a: a next pixel is selected, and then the process goes to STEP S1-3 so that the reading part 12 reads the pixel data of the next pixel from the printing image data. And then, the process goes to STEP S1-5.

STEP S1-13: the second determination part 13 determines whether the RGB color values are equal to a same value. If so, the pixel is determined as a grayscale pixel, and then the process goes to STEP S1-14. If not so, the pixel is determined as a color pixel, and the process goes to STEP S1-15.

STEP S1-14: the third determination part 15 determines whether any one of the RGB color values is less than or equal to the second predetermined threshold (i.e., 5). If so, the grayscale pixel is determined as a black pixel, and the process goes to STEP S1-16. If not so, the grayscale pixel is determined as a gray-white pixel, and then the process goes to STEP S1-17.

STEP S1-15: the third determination part 15 controls the conversion part 16 so as to let it convert, according to the predetermined conversion rule shown in FIG. 4B, the RGB color values of the color pixel into CMYK color values, and then the process goes to STEP S1-18.

STEP S1-16: the third determination part 15 controls the conversion part 16 so as to let it converts, according to the predetermined conversion rule, the RGD color values of the black pixel into CMYK color values, and further controls the change part 17 so as to let it set all the converted CMYK color values to 255. And then, the process goes to STEP S1-18.

STEP S1-17: the third determination part 15 controls the conversion part 16 so as to let it convert, according to the predetermined conversion rule, the RGB color values into CMYK color values, and further controls the change part 17 so as to let it set all the CMY color values to zero, and to calculate, according to the second predetermined rule, a new K color value on the basis of any one of the RGB color values as a newly-set K color value. And then, the process goes to STEP S1-18.

STEP S1-18: the third determination part 15 determines whether the pixel data of each pixel is read out by the reading part 12 from the printing image data. If not so, the third determination part 15 controls the temporary storage part 20 so as to let it temporarily store, regarding the black pixel or the gray-white pixel, its converted and changed CMYK color values, and regarding the color pixel, its converted CMYK color values, and then the process goes to STEP S1-18a. If so, the process goes to the STEP S1-19.

STEP S1-18a: a next pixel is selected, and the process goes to STEP S1-4 so that the reading part 12 reads the pixel data of the next pixel from the printing image data. And then the process goes to STEP S1-13.

STEP S1-19: the printing part 18 conducts a printing process with respect to the printing image data on the basis of the reset CMYK color values of each pixel (in particular, on the basis of the changed CMYK color values of a black pixel or a grayscale pixel, the kept CMYK color values of a color pixel whose related printing image data type is the CMYK data type, or the converted CMYK color values of a color pixel whose related printing image data type is the RGB data type) by utilizing the CMYK toners. In this way, it is possible to print, on a paper medium, a diagnostic image which is used to assist a doctor to make a diagnosis. After that, the process of the medical image printing device 10 ends.

### <Function and Effect of First Embodiment>

In the medical image printing device and the medical printing system according to the first embodiment, the first determination part 11 first determines the data type of the printing image data.

In a case where the printing image data type is determined as the CMYK data type, the reading part 12 obtains the color values of each pixel; the second determination part 13 determines each pixel as a grayscale pixel or color pixel; and the calculation part 14 and the third determination part 15 further determine the grayscale pixel as a black pixel or a gray-white pixel. Here, for each pixel, if this pixel is determined as the color pixel, then its respective color values (the CMYK color values) are kept by the keeping part 19; if this pixel is determined as the black pixel, then its respective color values (the CMYK color values) are changed to 255 by the change part 17; and if this pixel is determined as the gray-white pixel, then, by the change part 17, its CMY color values are changed to zero, and its K color value is changed to a newly-set K value set according to the first predetermined calculation rule.

As a result, after a black pixel is printed on a paper medium, since the CMYK color values of this pixel have been changed to 255 (i.e., the CMYK toners have been used on the basis of the changed CMYK color values), it is possible to guarantee that the level of black color of a position on the paper medium, corresponding to this pixel is high enough. Furthermore, after a gray-white pixel is printed on the paper medium, since the CMY color values of this pixel have been changed to zero (i.e., the CMY toners are not used), and because the K color value of this pixel has been changed to newly-set K value (i.e., only the K toner is used on the basis of the newly-set K values), it is possible to guarantee that the above-mentioned color shift problem may not occur at a position on the paper medium, corresponding to this pixel. Moreover, regarding a color pixel, since the CMYK color values of this pixel have been kept (i.e., have not been changed), it is also possible to print this pixel on the basis of its original color values.

On the other hand, in a case where the printing image data type is determined as the RGB data type, the reading part 12 obtains the color values of each pixel; the second determination part 13 determines each pixel as a grayscale pixel or a color pixel; the third determination 15 further determines the grayscale pixel as a black pixel or a gray-white pixel; and the conversion part 16 converts the color values (the RGB colors values) of each pixel into CMYK color values. Here, for each pixel, if this pixel is determined as the color pixel, then its converted CMYK color values are unchanged; if this pixel is determined as the black pixel, then its converted CMYK color values are changed to 255 by the change part 17; and if this pixel is determined as the gray-white pixel, then, by the change part 17, its converted CMY color values are changed to zero, and its converted K value is changed to a newly-set K value set according to a second predetermined calculation rule.

As a result, after a black pixel is printed on a paper medium, since the converted CMYK color values of this pixel have been changed to 255 (i.e., the CMYK toners have been used on the basis of the changed CMYK color values), it is possible guarantee that the level of black color of a position on the paper medium, corresponding to this pixel is high enough. Furthermore, after a gray-white pixel is printed on the paper medium, since the converted CMY color values of this pixel have been changed to zero (i.e., the CMY toners are not used), and because the converted K color value of this pixel has been changed to newly-set K value (i.e., only K toner is used on the basis of the newly-set K values), it is possible to guarantee that the above-mentioned color shift problem may not occur at a position on the paper medium, corresponding to this pixel. Moreover, regarding a color pixel, since the converted CMYK color values of this pixel have not been changed, it is also possible to print this pixel on the basis of its converted color values.

### <Second Embodiment>

Compared to the medical image printing device 10 according to the first embodiment, a medical image printing device according to this embodiment receives only printing image data whose data type is the CMYK data type. Here it should be noted that the descriptions of the functions of the medical image printing device in this embodiment, which are the same as those of the medical image printing device 10 in the first embodiment, are omitted.

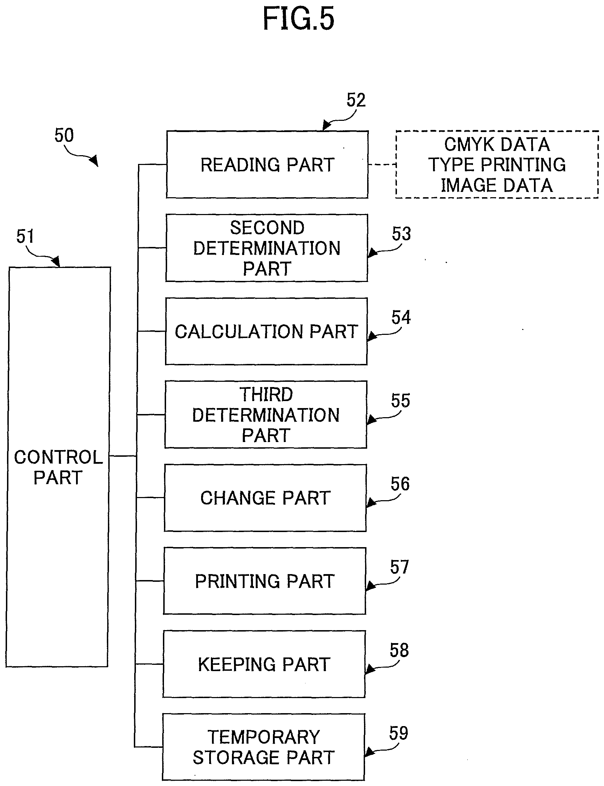

FIG. 5 is a block diagram of a medical image printing device 50 according to this embodiment.

As shown in FIG. 5, the medical image printing device 50 includes a reading part 52 (corresponding to the reading part 12 in the first embodiment), a color value determination part (also called a "second determination part") 53 (corresponding to the second determination part 13 in the first embodiment), a calculation part 54 (corresponding to the calculation part 14 in the first embodiment), a third determination part 55 (corresponding to the third determination part 15 in the first embodiment), a change part 56 (corresponding to the change part 17 in the first embodiment), a printing part 57 (corresponding to the printing part 18 in the first embodiment), a keeping part 58 (corresponding to the keeping part 19 in the first embodiment), a temporary storage part 59 (corresponding to the temporary storage part 20 in the first embodiment), and a control part 51 (corresponding to the control part 21 in the first embodiment) for controlling the above-mentioned parts.

In this embodiment, the functions of the above-mentioned parts do not include the functions of the corresponding parts in the first embodiment related to the printing image data, whose data type is the RGB data type, as described in the first embodiment. In other words, the functions of the above-mentioned parts in this embodiment are the same as the functions of the corresponding parts in the first embodiment related to the printing image data, whose data type is the CMCK data type, as described in the first embodiment. As a result, the descriptions of the respective parts in this embodiment are omitted.

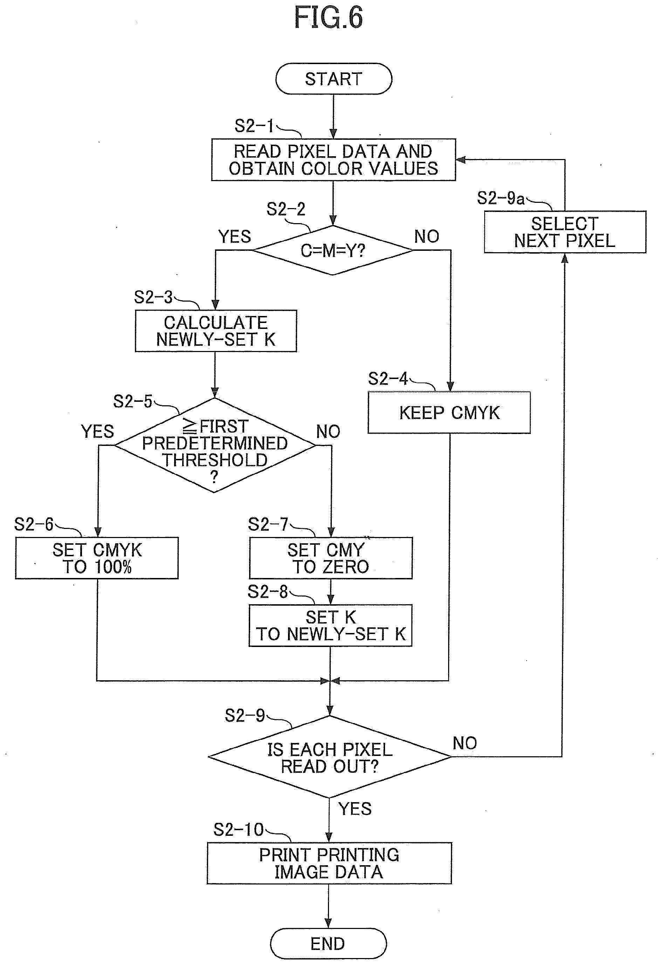

FIG. 6 is a flowchart of a process of the medical image printing device 50 according to this embodiment.

As shown in FIG, 6, the process of the medical image printing device 50 includes STEPS S2-1, S2-2, ..., S2-9, S2-9a, and S2-10 in which STEP S2-1 is the same as STEP S1-3 in the first embodiment; STEPS S2-2 to S2-9 and S2-9a are the same as STEPS S1-5 to S1-12 and S1-12a in the first embodiment; and STEP 2-10 is the same as STEP S1-19 in the first embodiment. As a result, the descriptions of the respective steps in this embodiment are omitted.

### <Function and Effect of Second Embodiment>

In the medical image printing device and the medical printing system according to the second embodiment, only printing image data, whose data type is the CMYK data type, is obtained by the reading part 52. In particular, the reading part 52 obtains the color values of each pixel; the second determination part 53 determines each pixel as a grayscale pixel or color pixel; and the calculation part 54 and the third determination part 55 further determine the grayscale pixel as a black pixel or a gray-white pixel. Here, for each pixel, if this pixel is determined as the color pixel, then its respective color values (the CMYK color values) are kept by the keeping part 58; if this pixel is determined as the back pixel, then its respective color values (the CMYK color values) are changed to 255 by the change part 56; and if this pixel is determined as the gray-white pixel, then, by the change part 56, its CMY color values are changed to 255, and its K color value is changed to a newly-set K value set according to the first predetermined calculation rule.

As a result, after a black pixel is printed on a paper medium, since the CMYK color values of this pixel have been changed to 255 (i.e., the CMYK toners have been used on the basis of the changed CMYK color values), it is possible guarantee that the level of black color of a position on the paper medium, corresponding to this pixel is high enough. Furthermore, after a gray-white pixel is printed on the paper medium, since the CMY color values of this pixel have been changed to zero (i.e., the CMY toners are not used), and because the K color value of this pixel has been changed to newly-set K value (i.e., only the K toner is used on the basis of the newly-set K values), it is possible to guarantee that the above-mentioned color shift problem may not occur at a position on the paper medium, corresponding to this pixel. Moreover, regarding a color pixel, since the CMYK color values of this pixel have been kept (i.e., have not been changed), it is also possible to print this pixel on the basis of its original color values.

### <Third Embodiment>

Compared to the medical image printing device 10 according to the first embodiment, a medical image printing device according to this embodiment receives only printing image data whose data type is the RGB data type. Here it should be noted that the descriptions of the functions of the medical image printing device in this embodiment, which are the same as those of the medical image printing device 10 in the first embodiment, are omitted.

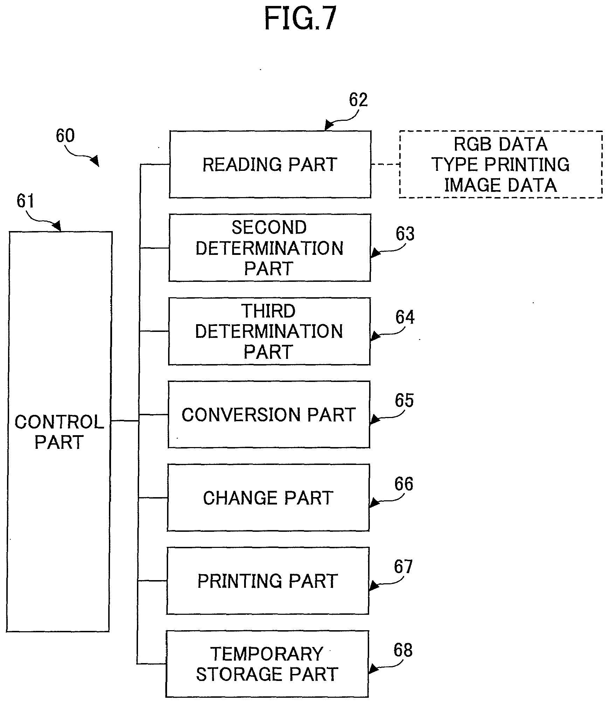

FIG. 7 is a block diagram of a medical image printing device 60 according to this embodiment.

As shown in FIG. 7, the medical image printing device 60 includes a reading part 62 (corresponding to the reading part 12 in the first embodiment), a color value determination part (also called a "second determination part") 63 (corresponding to the second determination part 13 in the first embodiment), a conversion part 65 (corresponding to the conversion part 16 in the first embodiment), a change part 66 (corresponding to the change part 17 in the first embodiment), a printing part 67 (corresponding to the printing part 18 in the first embodiment), a temporary storage part 68 (corresponding to the temporary storage part 20 in the first embodiment), and a control part 61 (corresponding to the control part 21 in the first embodiment) for controlling the above-mentioned parts.

In this embodiment, the functions of the above-mentioned parts do not include the functions of the corresponding parts in the first embodiment related to the printing image data, whose data type is the CMYK data type, as described in the first embodiment. In other words, the functions of the above-mentioned parts in this embodiment are the same as the functions of the corresponding parts in the first embodiment related to the printing image data, whose data type is the RGB data type, as described in the first embodiment. As a result, the descriptions of the respective parts in this embodiment are omitted.

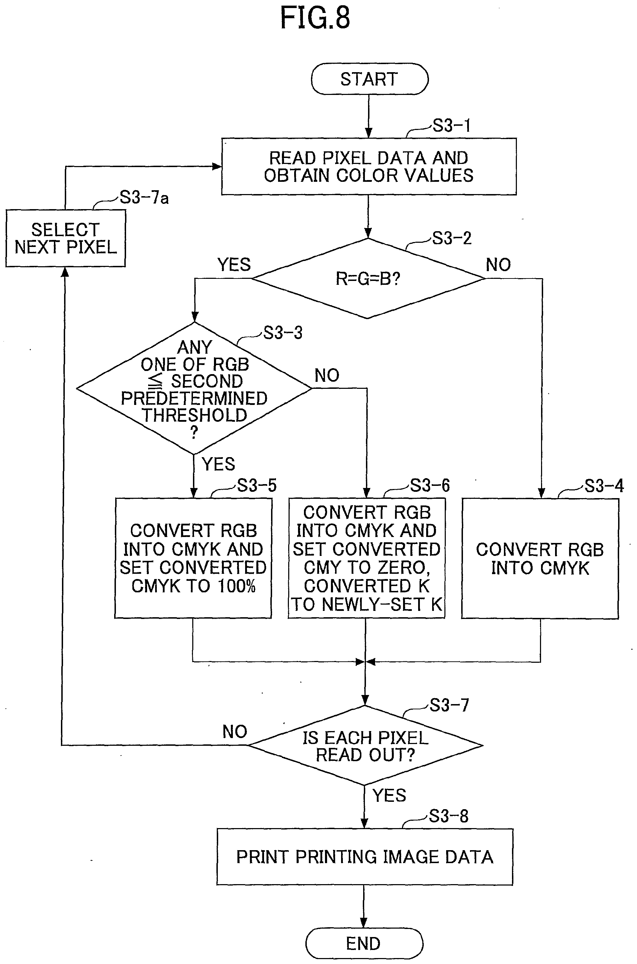

FIG. 8 is a flowchart of a process of the medical image printing device 60 according to this embodiment.

As shown in FIG, 8, the process of the medical image printing device 60 includes STEPS S3-1, S3-2, ..., S3-7, S3-7a, and S3-8 in which STEP S3-1 is the same as STEP S1-4 in the first embodiment; STEPS S3-2 to S3-7 and S3-7a are the same as STEPS S1-13 to S1-18 and S1-18a in the first embodiment; and STEP 3-8 is the same as STEP S1-19 in the first embodiment. As a result, the descriptions of the respective steps in this embodiment are omitted.

### <Function and Effect of Third Embodiment>

In the medical image printing device and the medical printing system according to the third embodiment, only printing image data, whose data type is the RGB data type, is obtained by the reading part 62. In particular, the reading part 62 obtains the color values of each pixel; the second determination part 63 determines each pixel as a grayscale pixel or a color pixel; the third determination 64 further determines the grayscale pixel as a black pixel or a gray-white pixel; and the conversion part 65 converts the color values (the RGB colors values) of each pixel into CMYK color values. Here, for each pixel, if this pixel is determined as the color pixel, then its converted CMYK color values are unchanged; if this pixel is determined as the black pixel, then its converted CMYK color values are changed to 255 by the change part 66; and if this pixel is determined as the gray-white pixel, then, by the change part 66, its converted CMY color values are changed to zero, and its converted K value is changed to a newly-set K value set according to a second predetermined calculation rule.

As a result, after a black pixel is printed on a paper medium, since the converted CMYK color values of this pixel have been changed to 255 (i.e., the CMYK toners have been used on the basis of the changed CMYK color values), it is possible guarantee that the level of black color of a position on the paper medium, corresponding to this pixel is high enough. Furthermore, after a gray-white pixel is printed on the paper medium, since the converted CMY color values of this pixel have been changed to zero (i.e., the CMY toners are not used), and because the converted K color value of this pixel has been changed to a newly-set K value (i.e., only K toner is used on the basis of the newly-set K values), it is possible to guarantee that the above-mentioned color shift problem may not occur at a position on the paper medium, corresponding to this pixel. Moreover, regarding a color pixel, since the converted CMYK color values of this pixel have not been changed, it is also possible to print this pixel on the basis of its converted color values.

While the present invention is described with reference to the specific embodiments chosen for purpose of illustration, it should be apparent that the present invention is not limited to these embodiments, but numerous modifications could be made thereto by those people skilled in the art without departing from the basic concept and technical scope of the present invention.

For example, in the above first to third embodiments, the color values of a color pixel are involved. However, actually, a medical image printing device and a medical image printing system may also output printing image data including only grayscale pixels (i.e., black pixels and gray-white pixels) for printing. Here it should be noted that even in this kind of case, it is also possible to use the medical image printing device and the medical image printing system according to the embodiments of the present invention to print a diagnostic image on a paper medium by utilizing the CMYK toners on the basis of the printing image data including only grayscale pixels.

Furthermore, the first predetermined calculation rule, the predetermined conversion rule, and the second calculation rule may be other predetermined calculation rules and conversion rule.

Moreover, the first and second predetermined thresholds are set to 250 and 5, respectively. However, in the present invention, for instance, the first predetermined threshold may be a color value within a color value range of 245 to 254, and the second predetermined threshold may be a color value within a color value range of 1 to 10.

## Claims

1. A medical image printing device for printing CMYK image data on a paper medium by utilizing CMYK toners, configured, for each image pixel sequentially:
to obtain CMYK color values of the pixel data of the pixel;
to determine whether the CMY color values are equal and, if so, to determine this pixel to be grayscale pixel but if not to determine it to be a color pixel;
if the pixel is a grayscale pixel, to calculate, according to a first predetermined calculation rule, from the CMY color value and the K color value, a new K value to serve as a newly-set K value; to determine whether the newly-set K value is greater than or equal to a first predetermined threshold and, if so, to determine the grayscale pixel to be a black pixel, and to set the CMYK color values of the black pixel to 255, so as to obtain second CMYK color values of the black pixel, but if not, to determine the grayscale pixel as a gray-white pixel, and to set the CMY color values of the gray-white pixel to zero, and to set the K color value of the gray-white pixel to the newly-set K value, so as to obtain second CMYK color values of the gray-white pixel;
and if the pixel is a color pixel, to keep the CMYK color values unchanged;
and to print any black pixel based on its second CMYK color values and any gray-white pixel based on its second CMYK color values and any color pixel based on its unchanged CMYK color values.

2. The medical image printing device according to claim 1, wherein the first predetermined threshold is 250.

3. The medical image printing device according to claim 1 or 2, wherein the first predetermined calculation rule is calculating a sum of any one of the CMY color values and the K value of the gray-white pixel to serve as the new K value.

4. A medical image printing device for printing RGB image data on a paper medium by utilizing CMYK toners, configured for each image pixel sequentially:
to obtain RGB color values of the pixel data of the pixel;
to determine whether the RGB color values are equal and, if so, to determine the pixel to be a grayscale pixel but if not to determine it to be a color pixel;
if the pixel is a grayscale pixel, to determine whether the RGB color value is less than or equal to a second predetermined threshold and, if so, to determine the grayscale pixel to be a black pixel, and to convert, according to a predetermined conversion rule, the RGB color values of the black pixel into CMYK color values, and to set the converted CMYK color values of the black pixel to 255, so as to obtain second CMYK color values of the black pixel, but, if not, to determine the grayscale pixel to be a gray-white pixel, to convert, according to the predetermined conversion rule, the RGB color values of the gray-white pixel into CMYK color values, and to set the converted CMY color values of the gray-white pixel to zero, and to set, based on any one of the RGB color values of the gray-white pixel, a new K value to serve as a newly-set K value according to a second predetermined calculation rule, so as to obtain second CMYK color values of the gray-white pixel;
and, if the pixel is a color pixel to convert the RGB color values of the color pixel into CMYK color values;
and to print any black pixel based its the second CMYK color values and any gray-white pixel based on its second CMYK color values and any color pixel based on its CMYK color values.

5. The medical image printing device according to claim 4, wherein the second threshold is 5.

6. The medical image printing device according to claim 4 or 5, wherein the second predetermined calculation rule is to subtract any one of the RGB color values of the gray-white pixel from 255 to serve as the new K value.

7. A medical image printing device according to claim 1 and claim 2 for printing image data on a paper medium by utilizing CMYK toners, configured to determine the data type of the printing image data to be either CMYK or RGB, and to determine the CMYK color values of the pixels accordingly.

8. A medical image printing system, which is connected to a medical image communications system to communicate with the medical image communications system, comprising:
a data conversion device for converting medical image data output from the medical image communications system into printing image data; and
a medical image printing device for receiving the printing image data, and printing, based on the printing image data, a diagnostic image on a paper medium by utilizing CMYK toners,
wherein,
the medical image printing device includes the medical image printing device according to any one of claims 1 to 7.

## Patentansprüche

1. Druckvorrichtung für medizinische Bilder zum Drucken von CMYK-Bilddaten auf ein Papiermedium durch Verwenden von CMYK-Tonern, die konfiguriert werden, für jedes Bildpixel sequentiell:
CMYK-Farbwerte der Pixeldaten des Pixels zu erhalten;
zu bestimmen, ob die CMY-Farbwerte gleich sind, und falls dies zutrifft, dieses Pixel zu bedingen, ein Grauskalenpixel zu sein, falls aber nicht, es zu bedingen, ein Farbpixel zu sein;
wenn das Pixel ein Grauskalenpixel ist, gemäß einer ersten vorgegebenen Berechnungsregel von dem CMY-Farbwert und dem K-Farbwert einen neuen K-Wert zu berechnen, um als ein neu gesetzter K-Wert zu dienen; zu bestimmen, ob der neu gesetzte K-Wert größer als oder gleich einem ersten vorgegebenen Schwellenwert ist, und falls dies zutrifft, zu bedingen, dass das Grauskalenpixel ein schwarzes Pixel ist und die CMYK-Farbwerte des schwarzen Pixels auf 255 zu setzen, um zweite CMYK-Farbwerte des schwarzen Pixels zu erhalten, falls aber nicht, zu bedingen, dass das Grauskalenpixel ein grau-weißes Pixel ist und CMY-Farbwerte des grau-weißen Pixels auf Null zu setzen und den K-Farbwert des grau-weißen Pixels auf den neu gesetzten K-Wert zu setzen, um zweite CMYK-Farbwerte des grau-weißen Pixels zu erhalten;
und wenn das Pixel ein Farbwert ist, die CMYK-Farbwerte unverändert zu lassen;
und jedes schwarze Pixel auf Grundlage seiner zweiten CMYK-Farbwerte und jedes grau-weiße Pixel auf Grundlage seiner zweiten CMYK-Farbwerte und jedes Farbpixel auf Grundlage seiner unveränderten CMYK-Farbwerte zu drucken.

2. Druckvorrichtung für medizinische Bilder nach Anspruch 1, wobei der erste vorgegebene Schwellenwert 250 ist.

3. Druckvorrichtung für medizinische Bilder nach Anspruch 1 oder 2, wobei die erste vorgegebene Berechnungsregel eine Summe von jedem der CMY-Farbwerte und des K-Werts des grau-weißen Pixels berechnet, um als der neue K-Wert zu dienen.

4. Druckvorrichtung für medizinische Bilder zum Drucken von RGB-Bilddaten auf ein Papiermedium durch Verwenden von CMYK-Tonern, die für jedes Bildpixel sequentiell konfiguriert werden:
RGB-Farbwerte der Pixeldaten des Pixels zu erhalten;
zu bestimmen, ob die RGB-Farbwerte gleich sind, und falls dies zutrifft, das Pixel zu bedingen, ein Grauskalenpixel zu sein, falls aber nicht, es zu bedingen, ein Farbpixel zu sein;
wenn das Pixel ein Grauskalenpixel ist, zu bestimmen, ob der RGB-Farbwert kleiner als oder gleich einem zweiten vorgegebenen Schwellenwert ist, und falls dies zutrifft, das Grauskalenpixel zu bedingen, ein schwarzes Pixel zu sein und gemäß einer vorgegebenen Umwandlungsregel die RGB-Farbwerte des schwarzen Pixels in CMYK-Farbwerte zu wandeln und die umwandelten CMYK-Farbwerte des schwarzen Pixels auf 255 zu setzen, um zweite CMYK-Farbwerte des schwarzen Pixels zu erhalten, falls aber nicht, das Grauskalenpixel zu bedingen, ein grau-weißes Pixel zu sein, gemäß der vorgegebenen Umwandlungsregel die RGB-Farbwerte des grau-weißen Pixels in CMYK-Farbwerte zu wandeln und die umwandelten CMY-Farbwerte des grau-weißen Pixels auf Null zu setzen und auf Grundlage eines jeden RGB-Farbwertes des grau-weißen Pixels einen neuen K-Wert zu setzen, um gemäß einer zweiten vorgegebenen Berechnungsregel als ein neu gesetzter K-Wert zu dienen, um zweite CMYK-Farbwerte des grau-weißen Pixels zu erhalten;
und wenn das Pixel ein Farbpixel ist, die RGB-Farbwerte des Farbpixels in CMYK-Farbwerte zu wandeln;
und jedes schwarze Pixel auf Grundlage seiner zweiten CMYK-Farbwerte und jedes grau-weiße Pixel auf Grundlage seiner zweiten CMYK-Farbwerte und jedes Farbpixel auf Grundlage seiner CMYK-Farbwerte zu drucken.

5. Druckvorrichtung für medizinische Bilder nach Anspruch 4, wobei der zweite Schwellenwert 5 ist.

6. Druckvorrichtung für medizinische Bilder nach Anspruch 4 oder 5, wobei die zweite vorgegebene Berechnungsregel darin besteht, einen jeden RGB-Farbwert des grau-weißen Pixels von 255 abzuziehen, um als der neue K-Wert zu dienen.

7. Druckvorrichtung für medizinische Bilder nach Anspruch 1 und Anspruch 2 zum Drucken von Bilddaten auf ein Papiermedium durch Verwenden von CMYK-Tonern, die konfiguriert wird, um den Datentyp der Druckbilddaten zu bedingen entweder CMYK oder RGB zu sein und die CMYK-Farbwerte der entsprechenden Pixel zu bedingen.

8. Drucksystem für medizinische Bilder, das mit einem Datenübertragungssystem für medizinische Bilder verbunden wird, um mit dem Datenübertragungssystem für medizinische Bilder in Verbindung zu stehen, umfassend:
eine Datenumwandlungsvorrichtung zum Wandeln einer Datenausgabe medizinischer Bilder des Datenübertragungssystem für medizinische Bilder in Druckbilddaten; und
eine Druckvorrichtung für medizinische Bilder zum Empfangen der Druckbilddaten und Drucken eines Diagnosebilds auf ein Papiermedium durch Verwenden von CMYK-Tonern auf Grundlage der Druckbilddaten,
wobei,
die Druckvorrichtung für medizinische Bilder die Druckvorrichtung für medizinische Bilder nach einem der Ansprüche 1 bis 7 aufweist.

## Revendications

1. Disposition d'impression d'images médicales permettant d'imprimer des données d'image CMJN sur un support papier en utilisant des encres en poudre CMJN, configuré, pour chaque pixel d'image, de manière séquentielle :
pour obtenir des valeurs de couleur CMJN des données de pixel du pixel ;
pour déterminer si les valeurs de couleur CMJ sont égales et, si cela est le cas, pour déterminer ledit pixel comme étant un pixel en niveaux de gris, mais, si cela n'est pas le cas, pour le déterminer comme étant un pixel en couleur ;
si le pixel est un pixel en niveaux de gris, pour calculer, selon une première règle de calcul prédéterminée, à partir de la valeur de couleur CMJ et de la valeur de couleur N, une nouvelle valeur N destinée à servir de valeur N nouvellement définie ; pour déterminer si la valeur N nouvellement définie est supérieure ou égale à un premier seuil prédéterminé et, si cela est le cas, pour déterminer le pixel en niveaux de gris comme étant un pixel noir, et pour définir les valeurs de couleur CMJN du pixel noir sur 255, de manière à obtenir des deuxièmes valeurs de couleur CMJN du pixel noir, mais, si cela n'est pas le cas, pour déterminer le pixel en niveaux de gris comme étant un pixel en gris et blanc, et pour définir des valeurs de couleur CMJ du pixel en gris et blanc sur zéro, et pour définir la valeur de couleur N du pixel en gris et blanc sur la valeur N nouvellement définie, de manière à obtenir des deuxièmes valeurs de couleur CMJN du pixel en gris et blanc ;
et si le pixel est un pixel en couleur, pour conserver inchangées les valeurs de couleur CMJN ;
et pour imprimer tout pixel noir en se basant sur ses deuxièmes valeurs de couleur CMJN et tout pixel en gris et blanc en se basant sur ses deuxièmes valeurs de couleur CMJN et tout pixel en couleur en se basant sur ses valeurs de couleur CMJN inchangées.

2. Dispositif d'impression d'images médicales selon la revendication 1, dans lequel le premier seuil prédéterminé est de 250.

3. Dispositif d'impression d'images médicales selon la revendication 1 ou 2, dans lequel la première règle de calcul prédéterminée consiste à calculer une somme de l'une quelconque parmi les valeurs de couleur CMJ et la valeur N du pixel en gris et blanc afin de servir de nouvelle valeur N.

4. Dispositif d'impression d'images médicales permettant d'imprimer des données d'image RVB sur un support papier en utilisant des encres en poudre CMJN, configuré, pour chaque pixel d'image, de manière séquentielle :
pour obtenir des valeurs de couleur RVB des données de pixel du pixel ;
pour déterminer si les valeurs de couleur RVB sont égales et, si cela est le cas, pour déterminer le pixel comme étant un pixel en niveaux de gris, mais, si cela n'est pas le cas, pour le déterminer comme étant un pixel en couleur ;
si le pixel est un pixel en niveaux de gris, pour déterminer si la valeur de couleur RVB est inférieure ou égale à un deuxième seuil prédéterminé et, si cela est le cas, pour déterminer le pixel en niveaux de gris comme étant un pixel noir, et pour convertir, conformément à une règle de conversion prédéterminée, les valeurs de couleur RVB du pixel noir en valeurs de couleur CMJN, et pour définir les valeurs de couleur CMJN converties du pixel noir sur 255, de manière à obtenir des deuxièmes valeurs de couleur CMJN du pixel noir, mais, si cela n'est pas le cas, pour déterminer le pixel en niveaux de gris comme étant un pixel en gris et blanc, pour convertir, conformément à la règle de conversion prédéterminée, les valeurs de couleur RVB du pixel en gris et blanc en valeurs de couleur CMJN, et pour définir les valeurs de couleur CMJ converties du pixel en gris et blanc sur zéro, et pour définir, en se basant sur l'une quelconque des valeurs de couleur RVB du pixel en gris et blanc, une nouvelle valeur N destinée à servir de valeur N nouvellement définie conformément à une deuxième règle de calcul prédéterminée, de manière à obtenir des deuxièmes valeurs de couleur CMJN du pixel en gris et blanc ;
et, si le pixel est un pixel en couleur, pour convertir les valeurs de couleur RVB du pixel en couleur en valeurs de couleur CMJN ;
et pour imprimer tout pixel noir en se basant sur ses deuxièmes valeurs de couleur CMJN et tout pixel en gris et blanc en se basant sur ses deuxièmes valeurs de couleur CMJN et tout pixel en couleur en se basant sur ses valeurs de couleur CMJN.

5. Dispositif d'impression d'images médicales selon la revendication 4, dans lequel le deuxième seuil est de 5.

6. Dispositif d'impression d'images médicales selon la revendication 4 ou 5, dans lequel la deuxième règle de calcul prédéterminée consiste à soustraire de 255 une quelconque parmi les valeurs de couleur RVB du pixel en gris et blanc afin de servir de nouvelle valeur N ;

7. Dispositif d'impression d'images médicales selon la revendication 1 et 2, permettant d'imprimer des données d'image sur un support papier en utilisant des encres en poudre CMJN, configuré pour déterminer le type de données des données d'image d'impression comme étant soit CMJN soit RVB, et pour déterminer les valeurs de couleur CMJN des pixels de manière correspondante.

8. Dispositif d'impression d'images médicales, qui est raccordé à un système de communication d'images médicales de manière à communiquer avec le système de communication d'images médicales, comprenant :
un dispositif de conversion de données permettant de convertir une sortie de données d'images médicales en provenance du système de communication d'images médicales en données d'images d'impression ; et
un dispositif d'impression d'images médicales permettant de recevoir les données d'images d'impression, et d'imprimer, en se basant sur les données d'images d'impression, une image de diagnostic sur un support papier en utilisant des encres en poudre CMJN,
dans lequel,
le dispositif d'impression d'images médicales comprend le dispositif d'impression d'images médicales selon l'une quelconque des revendications 1 à 7.
